# EUROPEAN PATENT APPLICATION

(11) **EP 4 541 922 A1**
(43) Date of publication of application: **23.04.2025**
(21) Application number: 23845321.1
(22) Date of filing: 12.07.2023
(51) Int. Cl.: C22C 38/02

(54) **NON-ORIENTED ELECTRICAL STEEL SHEET HAVING HIGH MAGNETIC FLUX DENSITY, AND MANUFACTURING METHOD THEREFOR**

(30) Priority: 29.07.2022 CN 202210908991
(71) Applicant: BAOSHAN IRON & STEEL CO., LTD., Shanghai 201900 (CN)
(72) Inventor: ZHANG, Feng, Shanghai 201900 (CN); LV, Xuejun, Shanghai 201900 (CN); FANG, Xianshi, Shanghai 201900 (CN); WANG, Bo, Shanghai 201900 (CN)
(74) Representative: Maiwald GmbH
(86) International application number: PCT/CN2023/106986
(87) International publication number: WO 2024/022109

(57) **Abstract**

The present invention discloses a non-oriented electrical steel plate with high magnetic induction, in addition to Fe and inevitable impurities, the steel plate further comprising the following chemical elements in percentage by mass: C≤0.003%, Si: 1.2-3.0%, Mn: 0.1-0.6%, P: 0.01-0.15%, Al: 0.1-0.4%, Ni: 0.05-1.0%, satisfying Si+Al: 1.30-3.20%; and does not comprise Sn and Sb. In addition, the present invention discloses a manufacturing method of the above non-oriented electrical steel plate with high magnetic induction, comprising the steps of: (1) smelting and casting; (2) heating, rough rolling, finish rolling and coiling: wherein a thickness of an intermediate slab after rough rolling is 20-45mm, a thickness of a plate after finish rolling is 1.2-2.0mm; after coiling, an aging treatment of 1-4h is carried out in the range of 550-650°C during the temperature reduction process; (3) pickling; (4) single cold rolling; (5) continuous annealing; (6) applying an insulating coating.

## Description

### Technical field

The present invention relates to a steel plate and a manufacturing method thereof, in particular to a non-oriented electrical steel plate and a manufacturing method thereof.

### Background

It is known that the non-oriented electrical steel plate is widely used in the existing technology. Improvement on the magnetic induction of the non-oriented electrical steel plate can effectively reduce the copper loss of the motor, compressor, and EI iron core, and contribute to the purpose of energy saving and consumption reduction. Thus, in order to effectively improve the magnetic induction of the finished non-oriented electrical steel plate, those skilled in the art usually improve the recrystallization microstructure of the hot rolled steel plate by reducing the Si and Al content in the steel, or by adopting the normalizing intermediate annealing measures, in order to obtain a more favorable crystalline texture ratio.

However, limiting the inclusion of Si and Al content in the steel will lead to the deterioration of the mechanical performance of the finished steel plate, and is not conducive to a significant increase in the frequency and rotational speed of electric tools. For this reason, it is of strong practical significance to manufacture low-cost, high magnetic induction, and high-strength non-oriented electrical steel plates more efficiently.

In response to this need, a great amount of research has been carried out by current researchers and certain research results have been achieved.

For example: Chinese patent publication number CN104073715A with a publication date of October 1, 2014, and titled as "Non-oriented Electrical Steel with High Magnetic Induction and Manufacturing Method Thereof" discloses a non-oriented electrical steel with high magnetic induction, which provides raw materials with excellent plate quality for the post-process by controlling the heating rate of the normalizing heating section, controlling the speed of the normalizing cooling section, and adopting a suitable system of the shot blasting and pickling process for cooperation. The technical solution is able to improve the magnetic induction B₅₀ by 200-500 gauss and the physical quality level of iron loss by 3-5% without adding additional alloying elements or changing the annealing process of the finished product. Of course, in the patented technical solution, it is also possible to optimize the annealing process so as to further improve the magnetic performance of the product, so that the magnetic induction can be further improved.

For another example: Chinese patent publication number CN105239005A with a publication date of January 13, 2016, and titled as "Non-Oriented Silicon Steel with High Magnetic Permeability and Manufacturing Method Thereof" discloses a non-oriented silicon steel with high magnetic permeability, comprising the following chemical elements in percentage by mass: C≤0.003%, Si: 0.1-1.8%, Al≤0.99%, Mn: 0.1-0.5%, Sn: 0.005-0.08%, Cu≤0.005%, and S≤0.005%. The production steps of the non-oriented silicon steel include: vacuum treatment after steelmaking; heating of the casting slab after slab casting; normalizing after hot rolling; cold rolling after pickling; annealing of the finished product; and applying a coating. The technical solution meets the premise of magnetic performance, due to the control of S and Cu through vacuum treatment to ensure that Cu+S<0.006%, Cu/S=0.5-1.7; then through the hot rolling+normalizing and specific annealing process of the finished product, the more coarse spherical MnS-Cu₂S composite inclusions are obtained, which reduces the MnS, Cu₂S and other sulfides, and at the same time reduces the cooling stress on the magnetic domains, and more 180°C magnetic domains or similar magnetic domains accounting for 60% in volume are obtained, thereby improving the magnetic permeability of the steel.

### Summary of the invention

One objective of the present invention is to provide a non-oriented electrical steel plate with high magnetic induction. The non-oriented electrical steel plate has excellent mechanical and electromagnetic performances with a yield ratio of 0.78-0.9 based on a new chemical composition design cooperating with an optimized manufacturing process, achieving remarkable features of high yield ratio, high magnetic induction, and low iron loss.

In order to achieve the above objective, the present invention provides a non-oriented electrical steel plate, in addition to Fe and inevitable impurities, comprising the following chemical elements in percentage by mass:
C≤0.003%, Si: 1.2-3.0%, Mn: 0.1-0.6%, P: 0.01-0.15%, Al: 0.1-0.4%, Ni: 0.05-1.0%; and satisfying Si+Al: 1.30-3.20%;
wherein the non-oriented electrical steel plate does not comprise Sn and Sb.

As another embodiment, the present invention provides a non-oriented electrical steel plate, wherein the steel plate has the following chemical elements in percentage by mass:
C≤0.003%, Si: 1.2-3.0%, Mn: 0.1-0.6%, P: 0.01-0.15%, Al: 0.1-0.4%, Ni: 0.05-1.0%, the balance of Fe and inevitable impurities;
wherein Si+Al: 1.30-3.20%.

With respect to the non-oriented electrical steel plate with high magnetic induction according to the present invention, the design principle of each chemical element is described below:
C: C would strongly hinder grain growth of the finished steel plate, and tends to combine with Nb, V, Ti or the like to form fine precipitates, thereby causing loss increase and generating magnetic aging. Therefore, in the high magnetic induction non-oriented electrical steel plate according to the present invention, the mass percentage of C content is controlled to be ≤0.003%.
Mn: Mn would combine with S to generate MnS, thereby reducing deterioration of magnetic performance. When the Mn content is lower than 0.1%, the sulfur retention effect of Mn would be poor; and when the Mn content is higher than 0.6%, the cost of steel production will be greatly increased. On this basis, in order to fully utilize the beneficial effect of Mn, in the non-oriented electrical steel plate according to the present invention, the mass percentage of Mn content is controlled to be 0.1-0.6%.
Si: The addition of an appropriate amount of Si to steel not only improves the resistivity of steel, but also effectively reduces the iron loss of steel. When the Si content in steel is higher than 3.0%, it will significantly reduce the magnetic induction of the steel and easily lead to the breakage of the cold rolled strip; and when the Si content in steel is lower than 1.2%, it will not be able to significantly reduce the iron loss of the steel. On this basis, in order to utilize the beneficial effect of Si, in the non-oriented electrical steel plate according to the present invention, the mass percentage of Si content is controlled to be 1.2-3.0%.
Al: Al is an important deoxidizing element. When the Al content is lower than 0.1%, good deoxidization effect cannot be achieved; and when the Al content exceeds 0.4%, continuous casting would be difficult, which increases the cost of steel production. On this basis, in order to utilize the beneficial effect of Al, in the non-oriented electrical steel plate according to the present invention, the mass percentage of Al content is controlled to be 0.1-0.4%.

In addition, it should be noted that the present invention, while controlling the mass percentage content of a single chemical element, the sum of the mass percentage content of Si and Al should be limited further, i.e., the value of "Si+Al" is controlled to be 1.3-3.2%.

This is because, when the sum of the mass percentage contents of Si and Al in the steel is lower than 1.3%, it is not possible to effectively improve the strength of the steel and reduce the iron loss of the steel; and when the sum of the mass percentage of Si and Al in the steel is higher than 3.2%, it is not possible to effectively improve the magnetic induction of the steel, and an additional normalizing intermediate annealing is required so as to improve the recrystallization microstructure of the hot rolled steel plate. The present inventors have found that by controlling the sum of the mass percentage of Si and Al in the range of 1.3-3.2%, a non-oriented electrical steel plate with high magnetic induction, low iron loss, and high yield ratio can be obtained without using the normalizing intermediate annealing conditions.

In the non-oriented electrical steel plate according to the present invention, Ni is added to the steel with a mass percentage of 0.05-1.0%, and preferably Ni is controlled to be 0.1-0.5%. The purpose of adding Ni to the steel is: Ni is a ferromagnetic element, and its properties are similar to those of Fe, adding 0.05% or more of Ni to the steel can significantly improve the magnetic induction intensity of the steel. However, it is not advisable to add excessive amount of Ni to steel, as the market price of Ni is high and needs to be limited to 1.0% or less from an economic point of view.

In some preferred embodiments, the mass percentage of Ni content is preferably controlled to be 0.1-0.5% so as to obtain a more optimal implementation effect.

In addition, in the non-oriented electrical steel plate according to the present invention, P is added at the same time, and the addition of P to the steel can significantly increase the strength of the steel. When the P content in the steel is higher than 0.01%, the strength of the steel starts to increase rapidly, but when the mass percentage of P content in the steel is higher than 0.15%, the cold rolling rollability of the steel will be significantly reduced, and it will lead to the occurrence of abnormalities such as crack and breakage of the steel plate. Therefore, in the high magnetic induction non-oriented electrical steel plate according to the present invention, the mass percentage of P content is controlled to be 0.01-0.15%.

In some preferred embodiments, the mass percentage of P content is preferably controlled to be 0.01-0.08% so as to obtain a more optimal implementation effect.

Preferably, in the non-oriented electrical steel plate according to the present invention, in the inevitable impurities: S≤0.004%, N≤0.0025%, O≤0.0025%.

In the non-oriented electrical steel plate according to the present invention, S, N and O are impurity elements in the non-oriented electrical steel plate, which are impurity elements introduced in the raw materials of steel or in the production process. If the technical conditions permit, the content of impurity elements in steel should be minimized as much as possible to obtain a steel with better performance and better quality.

In the present invention, if the content of S, N and O in the steel is too high, it will adversely affect the performance of the steel. Therefore, the mass percentage of S, N and O content in the steel must be strictly controlled, and is specifically controlled to: S≤0.004%, N≤0.0025%, O≤0.0025%. Preferably, in the non-oriented electrical steel plate according to the present invention, the composition of the steel plate satisfies at least one of the following in percentage by mass:
Ni: 0.1-0.5%;
P: 0.01-0.08%.

Preferably, in the non-oriented electrical steel plate according to the present invention, the steel plate has a thickness of 0.2-0.5mm.

Preferably, in the non-oriented electrical steel plate according to the present invention, a number proportion of equiaxed crystals having a ratio of the long and short axes between 1.0-4.0 is 75% or more.

Preferably, in the non-oriented electrical steel plate according to the present invention, the steel plate has a yield ratio of 0.78-0.9.

Preferably, in the non-oriented electrical steel plate according to the present invention:
when 1.30≤Si+Al≤2.20%, an iron loss P_{15/50}≤3.2 W/kg, a magnetic induction B₅₀≥1.725 T;
when 2.20<Si+Al≤3.20%, an iron loss P_{15/50}≤3.0 W/kg, a magnetic induction B₅₀≥1.695 T.

Accordingly, another objective of the present invention is to provide a manufacturing method of the above non-oriented electrical steel plate. The manufacturing method is simple and feasible with convenient production operation process, and the hot rolled steel coil manufactured by hot rolling and coiling does not require normalizing intermediate annealing process. Based the manufacturing method, a non-oriented electrical steel plate with high magnetic induction having excellent mechanical and electromagnetic performances can be obtained.

In order to achieve the above objective, the present invention provides a manufacturing method of the non-oriented electrical steel plate, comprising the steps of:
(1) smelting and casting according to the above composition to form a continuous casting slab;
(2) subjecting the continuous casting slab to heating, rough rolling, finish rolling and coiling: wherein a thickness of an intermediate slab after rough rolling is 20-45mm, a thickness of a plate after finish rolling is 1.2-2.0mm; after coiling, an aging treatment of 1-4h is carried out in the range of 550-650°C during the temperature reduction process to form a hot rolled steel coil;
(3) pickling of the hot rolled steel coil;
(4) single cold rolling of the hot rolled steel coil to form a steel plate;
(5) continuous annealing of the steel plate;
(6) applying an insulating coating to a surface of the steel plate.

In the present invention, the inventor optimizes the design of the chemical composition of the steel, and at the same time limits a reasonable manufacturing process, which obtain a continuous casting slab after smelting and casting, and then obtain a plate with the required microstructure through heating, rough rolling, finish rolling and coiling sequentially. The present invention optimizes the design of the thickness of the intermediate slab after hot rolling and rough rolling, as well as the thickness of the plate after hot rolling and finish rolling, and provides aging treatment for hot rolled steel coil after finish rolling and coiling, which can effectively manufacture non-oriented electrical steel plate with high magnetic induction and high yield ratio by cooperating with subsequent pickling, single cold rolling, continuous annealing, and applying insulation coating process.

**In** the smelting and casting process of the above step (1) of the present invention, the smelting and casting may specifically comprise four steps: "molten iron pretreatment", "converter smelting", "RH refining", and "continuous casting". Based on this process, a qualified continuous casting slab satisfying the chemical composition design of the present invention can be obtained with assurance.

**In** the present invention, after continuous casting into a slab, reheating, rough rolling, finish rolling and coiling are carried out sequentially. The actual performance is controlled according to the chemical composition, and combined with the needs of electromagnetic and mechanical performances, after the hot rolling and rough rolling, it is necessary to control the thickness of the intermediate slab after rough rolling to 20-45mm. At this point, by optimizing the reduction rate of the finish rolling pass and cooling water distribution, the thickness of the plate after hot rolling and finishing rolling can be further adjusted to be 1.2-2.0mm.

It should be noted that the thinner the thickness of the plate after hot rolling and finish rolling, under the same temperature conditions, the smaller the gradient of heat flow at the surface layer and core of the hot-rolled and finish-rolled plate, the more sufficient the recrystallization of the hot rolled microstructure will be, the more advantageous to the formation of equiaxed crystals that are more favorable to the magnetic induction of the finished steel plate. At this point, under the condition of higher reduction rate of hot rolling and finish rolling, the equiaxed crystals in the hot rolled microstructure along the rolling direction is continuously elongated, such that the ratio of the long and short axes becomes higher and will generally exceed 4.0. At this point, the magnetic anisotropy of the finished steel plate will increase, and the yield ratio of the finished steel plate will decrease. Therefore, after hot rolling, finish rolling and coiling, it is necessary to carry out aging treatment of 1-4h in the range of 550-650°C in the temperature reduction process. Under the effect of Ni, the growth rate of the equiaxed crystals along the vertical rolling direction is increased so that the ratio of the long and short axes of the equiaxed crystals along the rolling direction is reduced and achieve a number proportion of ≥75% for equiaxed crystals having the ratio between 1.0-4.0. Here, the higher the number proportion of the equiaxed crystals, the better, but is limited to the current technical conditions and cannot reach 100%.

In the present invention, after the heating, rough rolling, finish rolling and coiling of step (2), there is no need to carry out the normalizing intermediate annealing process, and a pickling and a single cold rolling can be carried out directly to reach a target thickness of 0.2-0.5mm. Then, continuous annealing can be preferably carried out at a temperature of 850-1,000°C under a mixed atmosphere of nitrogen and hydrogen, and the steel plate obtained after continuous annealing is further applied with an insulation coating, so as to obtain the finished non-oriented electrical steel plate with high magnetic induction having a to yield ratio of 0.78-0.90 of the present invention.

Preferably, in the manufacturing method according to the present invention, in step (5), the continuous annealing is carried out at a temperature of 850-1000°C under a mixed atmosphere of nitrogen and hydrogen.

Preferably, in the manufacturing method according to the present invention, in step (5), the proportion of nitrogen in the mixed atmosphere of nitrogen and hydrogen is 50-70% and the proportion of hydrogen is 30-50%.

Compared with the prior art, the non-oriented electrical steel plate and the manufacturing method thereof according to the present invention have advantages as well as beneficial effects as described below:
**In** the non-oriented electrical steel plate according to the present invention, the inventor has designed a novel non-oriented electrical steel plate with high magnetic induction by means of a new chemical composition design and combined with an optimized manufacturing process.

**In** the present invention, on the basis of reasonable chemical composition, the inventor optimizes and controls the thickness of the intermediate slab after hot rolling and rough rolling and the thickness of the finished product after hot rolling and finish rolling, conducts aging treatment on the hot rolled steel coil after finish rolling and coiling, and controls the proportion of equiaxed crystals having a ratio of long and short axes between 1.0-4.0 in the steel coil to 75% or more, so as to improve the magnetic induction and enhance the yield ratio of the steel plate. Moreover, the hot rolled steel coils do not need to carry out normalizing intermediate annealing process, which means that the production operation process is simple. Thus, the manufactured non-oriented electrical steel plate with high magnetic induction is characterized by high yield ratio, high magnetic induction and low iron loss.

**In** addition, the technical solution designed by the present invention can significantly reduce the impurity elements in steelmaking as well as the difficulty of controlling harmful inclusions, and there is no need to add Sn and Sb trace elements to the steel, which can effectively save the cost and has good prospects for popularization and application value.

### Brief description of the drawings

Fig. 1 schematically shows the relationship between the Ni content and the magnetic induction intensity of the finished steel plate in the non-oriented electrical steel plate with high magnetic induction according to the present invention.
Fig. 2 schematically shows the relationship of the number proportion of equiaxed crystals having a ratio of the long and short axes between 1.0-4.0 in the microstructure with respect to the yield ratio of the non-oriented electrical steel plate with high magnetic induction according to the present invention.

### Detailed description

The non-oriented electrical steel plate with high magnetic induction and the manufacturing method thereof according to the present invention are further explained and illustrated below with reference to the drawings of the specification and the specific embodiments. However, the explanation and illustration do not constitute improper limitation to the technical solution of the present invention.

### Examples 1-6 and comparative example 1-2

The mass percentage of each chemical element for the non-oriented electrical steel plates with high magnetic induction of Examples 1-6 and the comparative steel plates of Comparative Examples 1-2 are listed in Table 1.

**Table 1. (wt%, the balance being Fe and inevitable impurities other than S, O, and N)**

| No. | | | | | | Chemical Element | | | | Si+Al |
|---|---|---|---|---|---|---|---|---|---|---|
| | C | Si | Mn | P | Al | Ni | S | N | 0 | |
| Example 1 | 0.0025 | 1.50 | 0.41 | 0.13 | 0.14 | 0.42 | 0.0027 | 0.0012 | 0.0009 | 1.64 |
| Example 2 | 0.0016 | 2.09 | 0.14 | 0.06 | 0.29 | 0.11 | 0.0015 | 0.0015 | 0.0009 | 2.38 |
| Example 3 | 0.0027 | 2.93 | 0.27 | 0.03 | 0.24 | 0.94 | 0.0005 | 0.0015 | 0.0009 | 3.17 |
| Example 4 | 0.0022 | 1.21 | 0.33 | 0.09 | 0.15 | 0.38 | 0.0035 | 0.0009 | 0.0014 | 1.36 |
| Example 5 | 0.0018 | 2.35 | 0.59 | 0.02 | 0.30 | 0.12 | 0.0011 | 0.0012 | 0.0006 | 2.65 |
| Example 6 | 0.0009 | 1.83 | 0.25 | 0.05 | 0.40 | 0.05 | 0.0017 | 0.0010 | 0.0015 | 2.23 |
| Comparative Example 1 | 0.0022 | 1.45 | 0.30 | 0.08 | 0.25 | **0.02** | 0.0032 | 0.0011 | 0.0012 | 1.70 |
| Comparative Example 2 | 0.0009 | 2.37 | 0.17 | **0.008** | **0.44** | 0.50 | 0.0022 | 0.0012 | 0.0013 | 2.81 |

In the present invention, the non-oriented electrical steel plates with high magnetic induction of Examples 1-6 and the comparative steel plates of Comparative Examples 1-2 are manufactured using the following steps:
(1) smelting and casting according to the chemical composition shown in Table 1: In the steelmaking process, the molten iron in the blast furnace was subjected to molten iron pretreatment, converter smelting, RH refining and continuous casting sequentially, so as to obtain a qualified continuous casting slab with a nominal thickness of 230mm, whose chemical composition (calculated in terms of mass percentage) met the requirements of the present invention.
(2) heating, rough rolling, finish rolling and coiling: The obtained continuous casting slab was fed into the heating furnace for heating, and after the heating was completed, it was taken out of the furnace and subjected to rough rolling, finish rolling and coiling, wherein controlling a thickness of an intermediate slab after rough rolling to 20-45mm, a thickness of a plate after finish rolling to 1.2-2.0mm; after coiling, an aging treatment of 1-4h was carried out in the range of 550-650°C during the temperature reduction process , after which the plate was naturally cooled to room temperature, so that a number proportion of equiaxed crystals having a ratio of the long and short axes between 1.0-4.0 in the microstructure of the plate is ≥75%.
(3) Pickling: The hot rolled steel coil after the above hot rolling and coiling was not subjected to normalizing intermediate annealing, and was subjected to pickling directly.
(4) single cold rolling: a target thickness of 0.2-0.5mm after single cold rolling.
(5) continuous annealing: continuous annealing was carried out in a mixed atmosphere of nitrogen and hydrogen, and the continuous annealing temperature was controlled to 850-1000°C.
(6) applying insulation coating: an insulation coating was applied to a surface of the steel plate after continuous annealing.

**In** the present invention, the chemical composition and related process parameters of the non-oriented electrical steel plates with high magnetic induction of Examples 1-6 all satisfy the control requirements of the design specification of the present invention; whereas in Comparative Examples 1-2, although the comparative steel plates of Comparative Examples 1-2 were also manufactured by using the above process steps, there are composition of the chemical elements and/or the related process parameters that do not comply with the design of the present invention.

It should be noted that in the comparative steel plates of Comparative Examples 1-2 designed by the present invention, they were naturally cooled to room temperature directly after coiling and were not subjected to aging treatment.

Table 2 lists the specific process parameters in the above manufacturing process and final finished thicknesses of the non-oriented electrical steel plates with high magnetic induction of Examples 1-6 as well as the comparative steel plates of Comparative Examples 1-2.

**Table 2**

| No. | Step (2) | | | | | | | | Step (4) | Step (5) | |
|---|---|---|---|---|---|---|---|---|---|---|---|
| | Temperature of entry into the furnace (°C) | Temperature of taking out of the furnace (°C) | Intermediate slab thickness (mm) | Plate thickness after finish rolling (mm) | Final rolling temperature (°C) | Coiling temperature (°C) | Aging treatment temperature (°C) | Aging treatment time (h) | Target thickness of finished product(m m) | Continuous annealing atmosphere | Continuous annealing temperature (°C) |
| Example 1 | 427 | 1128 | 40 | 2.0 | 885 | 581 | 552 | 2.5 | 0.50 | 30%H₂+70%N₂ | 920 |
| Example 2 | 385 | 1117 | 30 | 1.4 | 914 | 685 | 641 | 1.0 | 0.35 | 30%H₂+70%N₂ | 960 |
| Example 3 | 237 | 1146 | 35 | 1.6 | 940 | 663 | 597 | 4.0 | 0.30 | 45%H₂+55%N₂ | 980 |
| Example 4 | 452 | 1137 | 22 | 1.6 | 922 | 628 | 571 | 2.5 | 0.30 | 50%H₂+50%N₂ | 880 |
| Example 5 | 588 | 1125 | 45 | 1.8 | 850 | 592 | 604 | 3.5 | 0.50 | 30%H₂+70%N₂ | 970 |
| Example 6 | 702 | 1152 | 42 | 1.6 | 880 | 687 | 650 | 1.5 | 0.35 | 30%H₂+70%N₂ | 920 |
| Comparativ e Example 1 | 455 | 1133 | 35 | **2.6** | 860 | 625 | - | - | 0.50 | 30%H₂+70%N₂ | 920 |
| Comparativ e Example 2 | 451 | 1132 | **50** | 2.2 | 920 | 632 | - | - | 0.35 | 30%H₂+70%N₂ | 960 |

It should be noted that when manufacturing the steel plates using the above process steps, after completing the aging treatment in step (2), the inventor sampled the steel plates of Examples 1-6 and Comparative Examples 1-2, respectively, then the microstructure of the samples of each of the Examples and the Comparative Examples were observed and analyzed.

Through the observation and analysis on the microstructure, the number proportion of equiaxed crystals having a ratio of the long and short axes between 1.0-4.0 in the microstructure of the steel plates after the completion of the aging treatment for each Examples and the Comparative Examples can be effectively obtained, and the results of the relevant observations and analyses are listed in the following Table 3. The observation and analysis test and statistical method were carried out according to national standard GB-T 10561 2005.

Table 3 lists the results of microstructure observation and analysis of the steel plates in Examples 1-6 and Comparative Examples 1-2 manufactured after aging treatment.

**Table 3**

| No. | The number proportion of equiaxed crystals having a ratio of long and short axes between 1.0 and 4.0 in the microstructure (%) |
|---|---|
| Example 1 | 81 |
| Example 2 | 88 |
| Example 3 | 79 |
| Example 4 | 82 |
| Example 5 | 96 |
| Example 6 | 75 |
| Comparative Example 1 | **63** |
| Comparative Example 2 | **73** |

It is observed that in Examples 1-6 according to the present invention, after the coiled steel plate has completed the aging treatment during the temperature reduction process, the number proportion of equiaxed crystals having a ratio of the long and short axes between 1.0-4.0 in the microstructure of the obtained steel plate are all ≥75%, and specifically 75-96%.

Accordingly, after completing the above microstructure observation and analysis, in order to verify the performance of the eventually manufactured steel plates, the inventor sampled the finished non-oriented electrical steel plates of Examples 1-6 and the comparative steel plates of Comparative Examples 1-2 manufactured by the above steps, and tested the mechanical performance, magnetic induction B₅₀ and iron loss P_{15/50} of the sample steel plates of Examples 1-6 and Comparative Examples 1-2, respectively, and the relevant test results are listed in Table 4 below.

Relevant performance test methods are described below:
Mechanical performance test: based on the national standard GB/T 228.1-2010 Tensile Test of Metallic Materials Part 1: Room Temperature Tensile Test Method for mechanical performance test, the test temperature is at 25°C constant temperature, and the type of sample is JIS 5# sample, so as to measure the yield ratio of the sample steel plates of Examples 1-6 and the Comparative Examples 1-2.

Magnetic induction performance test: based on the national standard GB/T 3655 - 2008, the iron loss performance test is carried out using the Epstein square method, with a constant temperature of 20°C, a sample size of 30mm × 300mm, a target mass of 0.5 kg, and a test parameter of B₅₀, so as to measure the magnetic induction B₅₀ of the sample steel plates of Examples 1-6 and Comparative Examples 1-2.

Iron loss performance test: based on the national standard GB/T 3655 - 2008, the iron loss performance test is carried out using the Epstein square method, with a constant temperature of 20°C, a sample size of 30mm × 300mm, a target mass of 0.5 kg, and a test parameter of P_{15/50}, so as to measure the iron loss P_{15/50} of the sample steel plates of Examples 1-6 and Comparative Examples 1-2.

Table 4 lists the test results for yield ratio, magnetic induction B₅₀, and iron loss P_{15/50} for the non-oriented electrical steel plates with high magnetic induction of Examples 1-6 and Comparative Examples 1-2.

**Table 4**

| No. | Yield ratio | Magnetic induction B₅₀ (T) | Iron loss P_{15/50} (W/kg) |
|---|---|---|---|
| Example 1 | 0.78 | 1.728 | 2.96 |
| Example 2 | 0.90 | 1.708 | 2.27 |
| Example 3 | 0.84 | 1.696 | 1.87 |
| Example 4 | 0.80 | 1.742 | 3.14 |
| Example 5 | 0.82 | 1.706 | 2.57 |
| Example 6 | 0.89 | 1.712 | 2.99 |
| Comparative Example 1 | **0.64** | 1.687 | 4.05 |
| Comparative Example 2 | **0.75** | 1.682 | 2.91 |

As shown in Table 4 above, in the present invention, the non-oriented electrical steel plates with high magnetic induction of Examples 1-6 have excellent mechanical and electromagnetic performance, with yield ratio in the range of 0.78-0.90, magnetic induction B₅₀ in the range of 1.694-1.742T, and iron loss P_{15/50} in the range of 1.82-3.14 W/kg, and their comprehensive performance is significantly superior to that of the steel plates of Comparative Examples 1-2. Comparative Examples 1-2 are also inferior to the implementation effect of the present invention because they do not fulfill the conditions limited by the present invention.

It should be noted that in Examples 1-6 designed by the present invention, when 1.30≤Si+Al≤2.20% (Example 1, Example 4), the iron loss P_{15/50} are all≤3.2W/kg and the magnetic induction B₅₀ are all ≥1.725T;
and when 2.20≤Si+Al≤3.20% (Example 2, Example 3, Example 5, and Example 6), the iron loss P_{15/50} are all≤3.0 W/kg, and the magnetic induction B₅₀ are all ≥1.695T.

Combined with the data listed in Tables 1, 2, 3 and 4 above, the two Comparative Examples manufactured by the present invention can be further analyzed and described.

In Comparative Example 1, the Ni content in the steel is 0.02%, which is lower than the lower limit requirement of 0.05% of the design of the present invention, and there was no aging treatment of 1-4h in the range of 550-650°C during the temperature reduction process, after which the steel plate was naturally cooled to room temperature, thus the number proportion of equiaxed crystals having the ratio of the long and short axes between 1.0-4.0 in the microstructure of the steel plate is only 63%, which is lower than the lower limit of the design requirement of the present invention, which is 75%. Accordingly, the yield ratio of this comparative steel of Comparative Example 1 manufactured eventually is only 0.64, which does not satisfy the lower limit of 0.78 as required by the design of the present invention.

In Comparative Example 2, the P content in the steel is 0.008%, which is lower than the lower limit requirement of 0.01% of the design of the present invention; the Al content in the steel is 0.44%, which is higher than the upper limit requirement of 0.4% of the design of the present invention, and there was no aging treatment of 1-4h in the range of 550-650°C during the temperature reduction process, after which the steel plate was naturally cooled to room temperature, thus making the proportion of the number of equiaxed crystals in the microstructure of the steel plate with the ratio of the long and short axes between 1.0-4.0 only 73%, which is lower than the lower limit of the design requirement of the present invention, which is 75%. Accordingly, the yield ratio of this comparative steel of Comparative Example 2 eventually manufactured is only 0.75, which does not satisfy the lower limit of 0.78 as required by the design of the present invention.

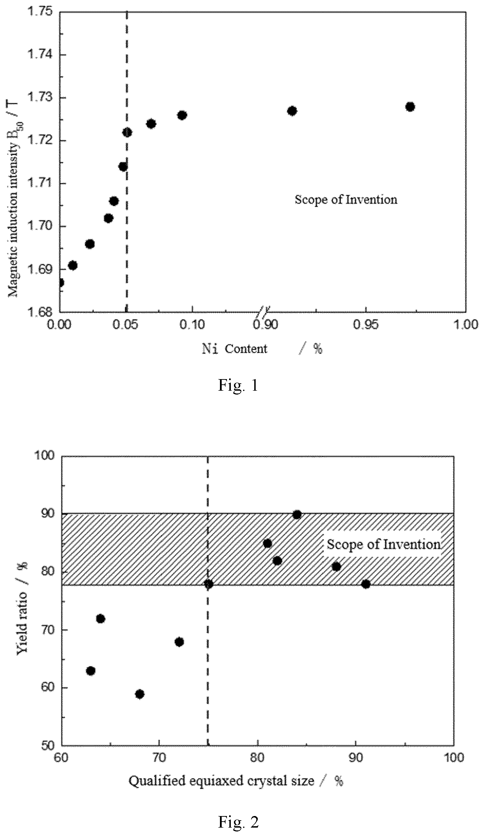

Fig. 1 schematically shows the relationship between the Ni content and the magnetic induction intensity of the finished steel plate in the non-oriented electrical steel plate with high magnetic induction according to the present invention.

As shown in Fig. 1, for a silicon steel of 3% Si, the magnetic induction intensity rises rapidly as the Ni content in the steel increases and can rise to 1.71T or more at a Ni content of 0.05%. Then, as the Ni content in the steel continues to increase, the magnetic induction intensity continues to rise slowly and is maintained at 1.72-1.73T.

Fig. 2 schematically shows the relationship of the number proportion of equiaxed crystals having a ratio of the long and short axes between 1.0-4.0 in the microstructure with respect to the yield ratio of the non-oriented electrical steel plate with high magnetic induction according to the present invention.

As shown in Fig. 2, the proportion of qualified equiaxed crystal size (number proportion of equiaxed crystals) having a ratio of the long and short axes between 1.0-4.0 in the microstructure is positively correlated with the yield ratio.

In the non-oriented electrical steel plate with high magnetic induction designed by the present invention, the yield ratio of the steel increases accordingly with the increase of the proportion of qualified equiaxed crystal size having a ratio of the long and short axes between 1.0-4.0 in the microstructure. When the proportion of qualified equiaxed crystal size reaches 75%, the yield ratio of the steel will be greater than 0.78 and fluctuates within the range of 0.78-0.90 with different chemical composition and the production process of the steel.

It should be noted that the portion of prior art in the protection scope of the present invention is not limited to the examples given herein. All prior art that does not contradict the solutions of the present invention, including but not limited to the previous patent documents, prior publications, prior applications, etc., can all be included in the protection scope of the present invention.

**In** addition, the combination of the technical features in the present disclosure is not limited to the combination described in the claims or the combination described in the specific examples. All technical features described herein can be freely combined in any form, unless contradicts with each other.

It should also be noted that the above-listed examples are only specific examples of the present invention. Obviously, the present invention should not be unduly limited to such specific examples. Changes or modifications that can be directly or easily derived from the present disclosure by those skilled in the art are intended to be within the protection scope of the present invention.

## Claims

1. A non-oriented electrical steel plate, wherein, in addition to Fe and inevitable impurities, comprising the following chemical elements in percentage by mass:
C≤0.003%, Si: 1.2-3.0%, Mn: 0.1-0.6%, P: 0.01-0.15%, Al: 0.1-0.4%, Ni: 0.05-1.0%; and satisfying Si+Al: 1.30-3.20%;
wherein the non-oriented electrical steel plate does not comprise Sn and Sb.

2. The non-oriented electrical steel plate of claim 1, wherein, the steel plate has the following chemical elements in percentage by mass:
C≤0.003%, Si: 1.2-3.0%, Mn: 0.1-0.6%, P: 0.01-0.15%, Al: 0.1-0.4%, Ni: 0.05-1.0%, the balance of Fe and inevitable impurities;
wherein Si+Al: 1.30-3.20%.

3. The non-oriented electrical steel plate of claim 1 or 2, wherein, in the inevitable impurities, S≤0.004%, N≤0.0025%, O≤0.0025%.

4. The non-oriented electrical steel plate of claim 1 or 2, wherein, the steel plate comprises at least one of the following chemical elements in percentage by mass:
Ni: 0.1-0.5%;
P: 0.01-0.08%.

5. The non-oriented electrical steel plate of claim 1 or 2, wherein, in the steel plate, a number proportion of equiaxed crystals having a ratio of the long and short axes between 1.0-4.0 is 75% or more.

6. The non-oriented electrical steel plate of claim 1 or 2, wherein, the steel plate has a thickness of 0.2-0.5mm.

7. The non-oriented electrical steel plate of claim 1 or 2, wherein, the steel plate has a yield ratio of 0.78-0.9.

8. The non-oriented electrical steel plate of claim 1 or 2, wherein,
when 1.30≤Si+Al≤2.20%, an iron loss P_{15/50}≤3.2 W/kg, a magnetic induction B₅₀≥1.725T;
when 2.20<Si+Al≤3.20%, an iron loss P_{15/50}≤3.0 W/kg, a magnetic induction B₅₀≥1.695T.

9. A manufacturing method of the non-oriented electrical steel plate of any one of claims 1-8, wherein, the method comprises the steps of:
(1) smelting and casting according to the composition of any one of claims 1-4 to form a continuous casting slab;
(2) subjecting the continuous casting slab to heating, rough rolling, finish rolling and coiling: wherein a thickness of an intermediate slab after rough rolling is 20-45mm, a thickness of a plate after finish rolling is 1.2-2.0mm; after coiling, an aging treatment of 1-4h is carried out in the range of 550-650°C during the temperature reduction process to form a hot rolled steel coil;
(3) pickling of the hot rolled steel coil;
(4) single cold rolling of the hot rolled steel coil to form a steel plate;
(5) continuous annealing of the steel plate;
(6) applying an insulating coating to a surface of the steel plate.

10. The manufacturing method of claim 9, wherein, in step (5), the continuous annealing is carried out at a temperature of 850-1000°C under a mixed atmosphere of nitrogen and hydrogen.

11. The manufacturing method of claim 9 or 10, wherein, the method does not comprise a normalizing intermediate annealing step for the hot rolled steel coil produced in step (2) prior to step (3).
